(19)

Europäisches
Patentamt
European
Patent Office
Office européen
des brevets

(11) **EP 4 148 630 A1**

(12) **EUROPEAN PATENT APPLICATION**

(43) Date of publication:
**15.03.2023 Bulletin 2023/11**

(21) Application number: **22180121.0**

(22) Date of filing: **21.06.2022**

(51) International Patent Classification (IPC):
**G06N 3/08** (2006.01)     **G06N 3/063** (2006.01)

(52) Cooperative Patent Classification (CPC):
**G06N 3/084; G06N 3/063**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.09.2021 JP 2021147507**

(71) Applicant: **FUJITSU LIMITED**
**Kawasaki-shi, Kanagawa 211-8588 (JP)**

(72) Inventors:
• **HARA, Yasushi**
  **Kawasaki-shi, Kanagawa, 211-8588 (JP)**
• **KASAGI, Akihiko**
  **Kawasaki-shi, Kanagawa, 211-8588 (JP)**
• **KAI, Yutaka**
  **Kawasaki-shi, Kanagawa, 211-8588 (JP)**
• **DANJO, Takumi**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **SPEED-UP PROGRAM, SPEED-UP METHOD, AND INFORMATION PROCESSING DEVICE**

(57)     A computer-implemented method of a speed-up processing, the method including: calculating variance of weight information regarding a weight updated by machine learning, for each layer included in a machine learning model at a predetermined interval at time of the machine learning of the machine learning model; and determining a suppression target layer that suppresses the machine learning on the basis of a peak value of the variance calculated at the predetermined interval and the variance of the weight information calculated at the predetermined interval.

FIG. 1

EP 4 148 630 A1

**Description**

FIELD

The embodiment discussed herein is related to a speed-up program, a speed-up method, and an information processing device.

BACKGROUND

For speed-up of machine learning of a machine learning model, use of a graphics processing unit (GPU) is effective, and in addition, distribution of processing to a plurality of GPUs is also effective. Up to now, speed-up has been achieved by mounting the plurality of GPUs in nodes that are information processing devices and executing machine learning processing in parallel in the nodes. However, processing for aggregating gradient information among the GPUs and reflection processing have needed time.

In such machine learning of the machine learning model, it is needed to frequently update a new learning portion each time of learning. Therefore, it is needed to set a learning rate (LR) that determines an update frequency to be higher. Meanwhile, an existing learning portion, on which machine learning has been already completed, closer to an input side has a lower learning rate. In an extreme case, the learning rate is often set to zero. Although it is not needed to perform machine learning processing for the portion with the learning rate of zero, the processing for aggregating the gradient information, the reflection processing, and weight calculation processing are executed at the same frequency as those of the new learning portion, and many unnecessary processes are performed.

For this reason, in recent years, a gradient skip technology is used that identifies a layer that does not need machine learning and does not perform and skips calculation and aggregation processing (Allreduce processing) of gradient information ($\Delta w$).

Japanese National Publication of International Patent Application No. 2018-520404, Japanese Laid-open Patent Publication No. 10-198645, and U.S. Patent No. 6119112 are disclosed as related art.

SUMMARY

TECHNICAL PROBLEM

However, with the technology described above, speed-up can be achieved by skipping machine learning, but accuracy of machine learning is deteriorated depending on a layer to skip machine learning or timing of skipping, and there is a case where machine learning ends without attaining target accuracy.

In one aspect, an object is to provide a speed-up program, a speed-up method, and an information processing device that can implement both of reduction in time to learning convergence and improvement in accuracy.

SOLUTION TO PROBLEM

According to an aspect of the embodiments, there is provided a computer-implemented method of a speed-up processing. In an example, the method includes: calculating variance of weight information regarding a weight updated by machine learning, for each layer included in a machine learning model at a predetermined interval at time of the machine learning of the machine learning model; and determining a suppression target layer that suppresses the machine learning on the basis of a peak value of the variance calculated at the predetermined interval and the variance of the weight information calculated at the predetermined interval.

ADVANTAGEOUS EFFECTS OF INVENTION

According to one embodiment, it is possible to implement both the reduction in time to learning convergence and the improvement in accuracy.

BRIEF DESCRIPTION OF DRAWINGS

FIG. 1 is a diagram for describing distributed learning of an information processing device according to an example 1;
FIG. 2 is a diagram for describing a reference technique of machine learning;
FIG. 3 is a diagram for describing a processing example of learning skip in machine learning;

FIG. 4 is a diagram for describing learning skip using a braking distance of a learning rate;

FIG. 5 is a diagram for describing calculation of a determination index;

FIG. 6 is a diagram for describing skip determination of each layer;

FIG. 7 is a diagram for describing processing of an information processing device according to the example 1;

FIG. 8 is a functional block diagram illustrating a functional configuration of the information processing device according to the example 1;

FIG. 9 is a diagram for describing details of a distributed processing unit;

FIGs. 10A and 10B are diagrams for describing setting of a threshold;

FIG. 11 is a flowchart illustrating a flow of processing according to the example 1;

FIG. 12 is a flowchart illustrating a flow of backward propagation processing;

FIGs. 13A and 13B are diagrams for describing an influence on a subsequent layer of a stopped layer;

FIGs. 14A through 14C are diagrams for describing an influence on a subsequent layer in a case of performing learning skip a plurality of times;

FIG. 15 is a diagram for describing an improvement point of threshold determination timing;

FIG. 16 is a diagram for describing improvement in the threshold determination timing;

FIG. 17 is a diagram for describing implementation of distributed calculation according to a BD cycle;

FIG. 18 is a diagram for describing implementation of learning skip in which a plurality of layers is put together;

FIG. 19 is a diagram for describing implementation of BD control in which a plurality of layers is put together; and

FIG. 20 is a diagram for describing a hardware configuration example.

DESCRIPTION OF EMBODIMENTS

Hereinafter, examples of a speed-up program, a speed-up method, and an information processing device disclosed in the present application will be described in detail with reference to the drawings. Note that the present embodiment is not limited by the examples. Furthermore, each of the examples may be appropriately combined within a range without inconsistency.

[Example 1]

[Overall Configuration]

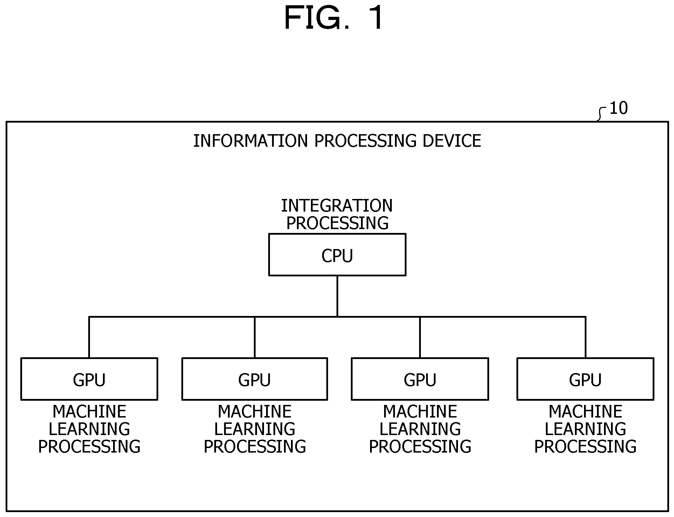

An information processing device 10 according to an example 1 executed generating a machine learning model by distributed processing using a plurality of GPUs in order to implement speed-up of machine learning processing. FIG. 1 is a diagram for describing distributed learning of the information processing device 10 according to the example 1. As illustrated in FIG. 1, the information processing device 10 is an example of a computer that includes a central processing unit (CPU) and the plurality of GPUs. The CPU executes control of the entire information processing device 10, and comprehensively manages generation of the machine learning model. Each GPU executes machine learning of the machine learning model in response to an instruction from the CPU. Note that a known method can be adopted as a distributed processing method.

In recent years, the gradient skip technology is used that identifies a layer that does not need machine learning using a learning rate of each layer (each layer) and suppresses (skip) learning without performing calculation and aggregation processing (Allreduce processing) of gradient information.

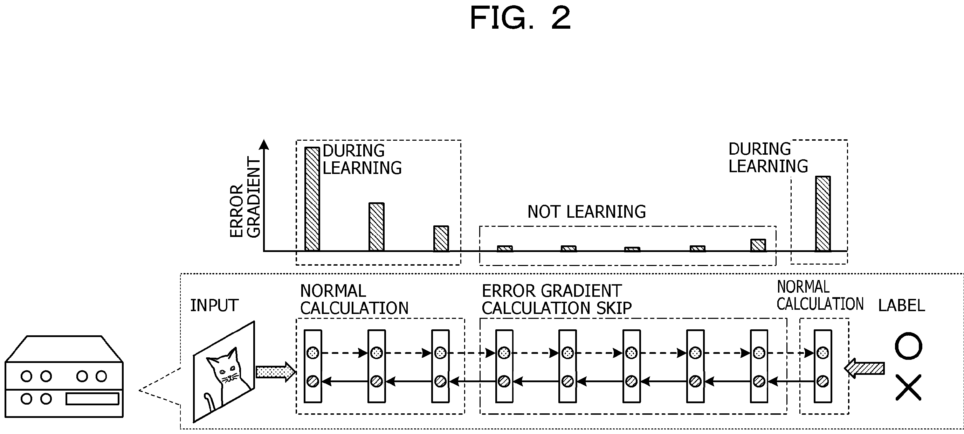

Here, a reference technique for learning skip (hereinafter may be simply referred to as "skip") will be described. FIG. 2 is a diagram for describing a reference technique for machine learning. The reference technique illustrated in FIG. 2 is a technique for generating a machine learning model by deep learning (DL) or the like and is a technique for shortening a learning time by acquiring a learning status from error gradient of the DL and skipping calculation of the error gradient.

For example, the reference technique detects a layer in which the learning rate indicating a progress status of learning is decreased and omits learning for the layer so as to shorten the learning time. For example, in each layer in which a difference between the error gradient at the time of latest iteration and the error gradient at the time of immediately previous iteration is equal to or larger than a threshold, learning is executed as usual also at the time of next iteration, and in each layer in which the difference is less than the threshold, learning skip is executed at the time of next iteration. For example, in the layer in which the learning rate is decreased, subsequent machine learning processing of calculating the error gradient and the like is suppressed.

However, in the reference technique, an influence of accuracy deterioration in a case of completely skipping the machine learning is partially unknown. For example, in the machine learning model such as a deep neural network (DNN), the accuracy tends to be deteriorated in a case where backward propagation processing for a plurality of layers is determined with reference to the learning rate (LR) or the like and stopped at the same time. Furthermore, if the timing to perform learning skip (the number of epochs and the number of iterations) is not proper, there is a case where the accuracy is deteriorated and the final accuracy does not attain the target.

Therefore, in recent years, regarding a layer determined to be a learning skip target in which each processing such as the calculation of the error gradient and the backward propagation is suppressed, processing of not suddenly performing learning skip, gradually reducing a learning rate of the layer in which learning is stopped, performing learning processing to some extent, and then performing learning skip is known.

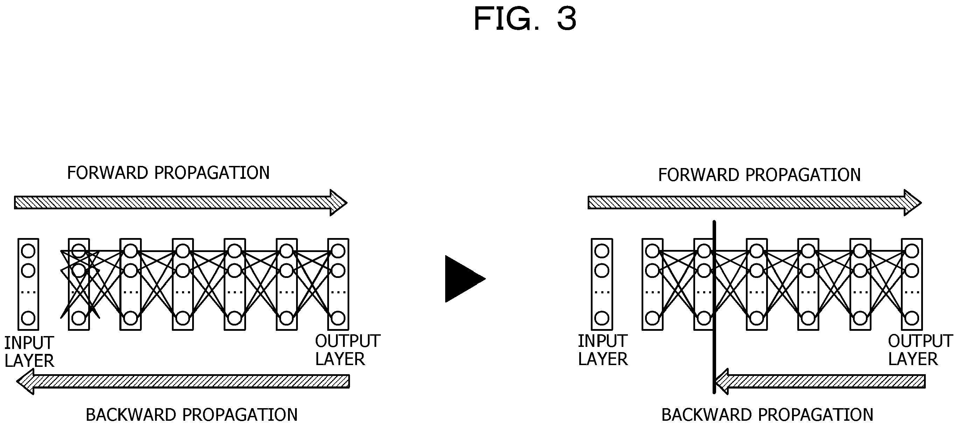

Here, an example of learning skip will be described. FIG. 3 is a diagram for describing a processing example of learning skip of machine learning. As illustrated in FIG. 3, in deep learning of a machine learning model, machine learning (calculation processing) by forward propagation and processing for updating weights and the like by backward propagation are executed. Here, update of weight information is stopped from an iteration in which learning has progressed to some extent at the time of update by the backward propagation. At this time, an input-side layer is stopped first. This is because the influence on the accuracy on the input side is low, whereas the learning accuracy may not attain target accuracy if an output side is stopped.

As for the final achievement accuracy of machine learning using the above-described learning skip, a decrease in the final achieved accuracy tends to be smaller when the layer for stopping learning is stopped after the learning rate becomes small to some extent. For this reason, introduction of braking distance (BRAKING_DISTANCE: BD) of the learning rate is proceeding, for stopping the learning after lowering the learning rate when a command to stop (skip) learning is given instead of suddenly stopping the learning of the target layer. For example, machine learning in which layers that are stopped in order from a layer closest to bottom are dropped into a familiar localized solution is used.

Here, an example of introducing the braking distance (BRAKING_DISTANCE: BD) of the learning rate as a hyperparameter, and suppressing learning in a stepwise manner for each layer belonging to a skip candidate block will be described. Note that a block is a collection of a plurality of layers.

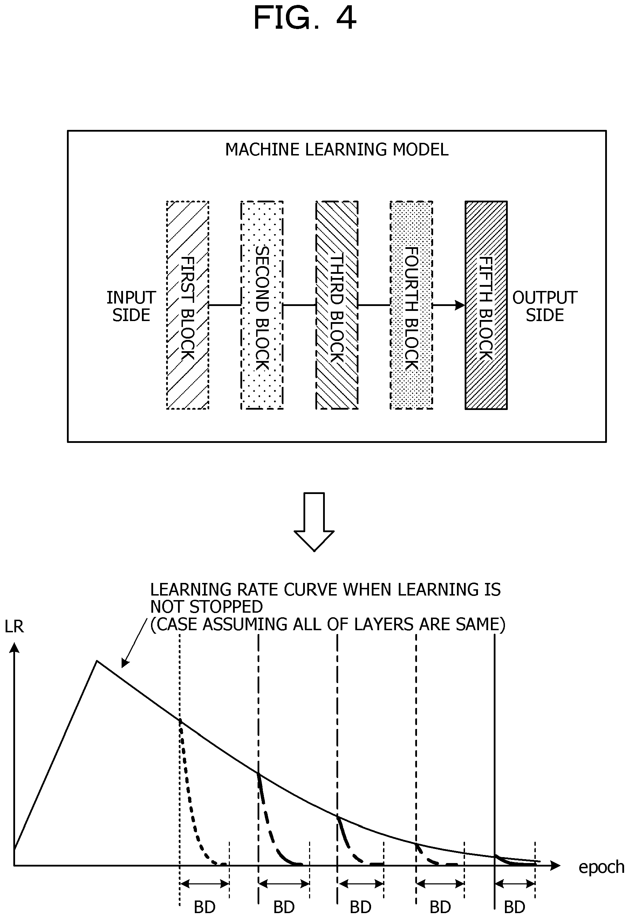

FIG. 4 is a diagram for describing learning skip using the braking distance of the learning rate. As illustrated in FIG. 4, the information processing device that performs machine learning divides layers into a first block, a second block, a third block, a fourth block, and a fifth block in order from the input side. Then, the information processing device controls the learning rate after warm-up is completed.

Then, when the first block is determined as a learning skip target, the information processing device executes machine learning with a learning rate significantly decreased as compared with that of normal learning for each iteration. Thereafter, when the second block is determined as the learning skip target, the information processing device executes machine learning with a learning rate significantly decreased as compared with that of normal learning for each iteration. In this way, the information processing device executes learning skip in the order from the block closest to the input layer.

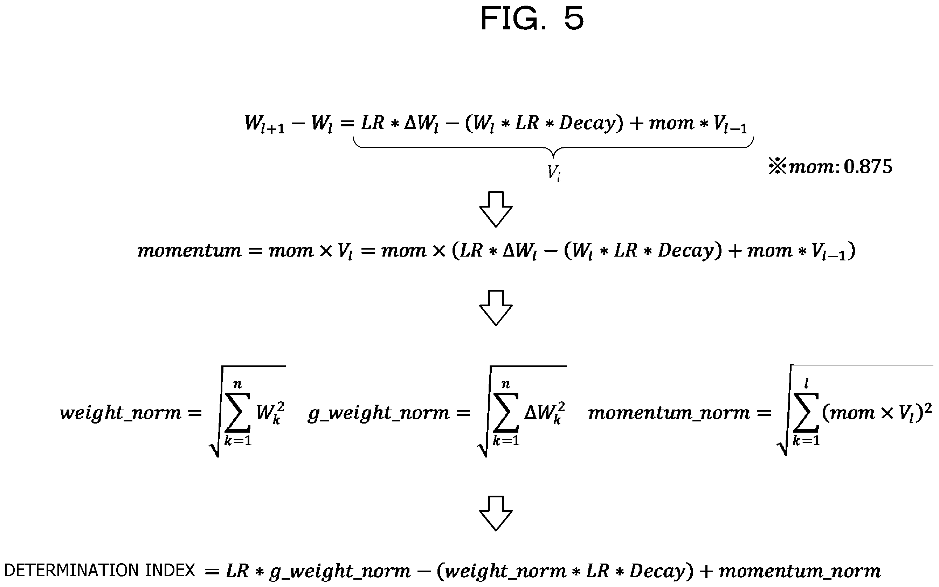

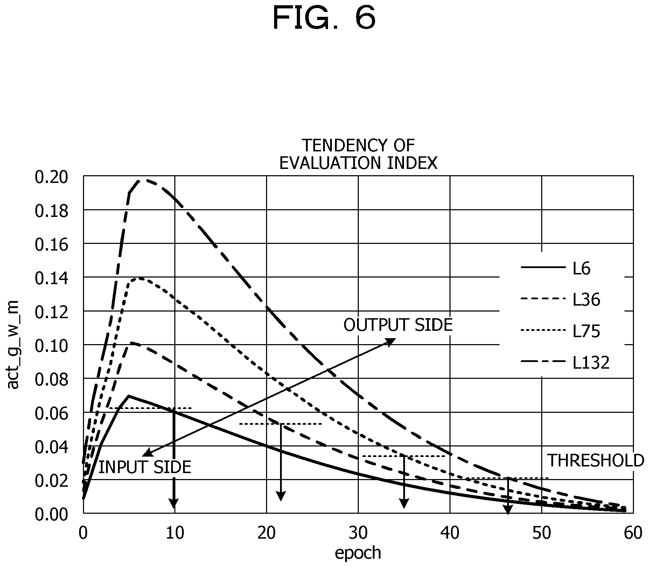

In determination of whether to perform such learning skip, a last updated value "$W_{l+1} - W_l$" of a weight W is often used for each layer. Note that $W_l$ is the weight at the time of the lth learning. FIG. 5 is a diagram for describing calculation of a determination index. To use the last updated value "$W_{l+1} - W_l$" that is a determinant as a threshold, a scalar value of the last updated value is calculated using a norm equation illustrated in FIG. 5, and the determination index is calculated. Thereafter, by setting epoch (corresponding to iteration and time) to a horizontal axis and setting the above-described scalar value to a vertical axis, the graph in FIG. 6 can be illustrated. FIG. 6 is a diagram for describing skip determination of each layer. L6 in FIG. 6 represents the 6th layer, L36 represents the 36th layer, L75 represents the 75th layer, and L132 represents the 132nd layer in the order from the beginning. Here, in the above-described learning skip or the like using the BD, the threshold is set for each layer from the input side to the output side according to the tendency of the determination index illustrated in FIG. 6, and start of the learning skip is determined.

However, there are the following problems. First, the threshold for each layer needs to be set. Secondly, the threshold is set from the weight (W) or the weight gradient (ΔW) itself, but the tendency of the determination index substantially varies depending on the setting of the learning rate (LR), weight attenuation (Weight-Decay), and the like. Therefore, after optimizing the hyperparameters LR and Weight-Decay, the start threshold of learning skip is optimized. That is, it is very time consuming and difficult to automate.

Therefore, it is desired to implement a method of setting the start threshold of learning skip that does not depend on the weight (W) or the weight gradient (ΔW) itself.

Therefore, the information processing device 10 according to the example 1 calculates variance of weights or weight gradients updated by machine learning for each layer of the machine learning model at a predetermined interval at the time of machine learning of the machine learning model. Then, the information processing device 10 determines a suppression target layer for suppressing machine learning on the basis of a peak value of the variance calculated at the predetermined interval and the variance calculated at the predetermined interval.

For example, the information processing device 10 obtains the variance of the weight (W) or the weight gradient (ΔW) for each layer, determines that the layer with the variance decreased from a variance time direction (epoch or iteration) peak by a threshold or more can undergo learning skip, and executes learning skip or learning skip using the BD.

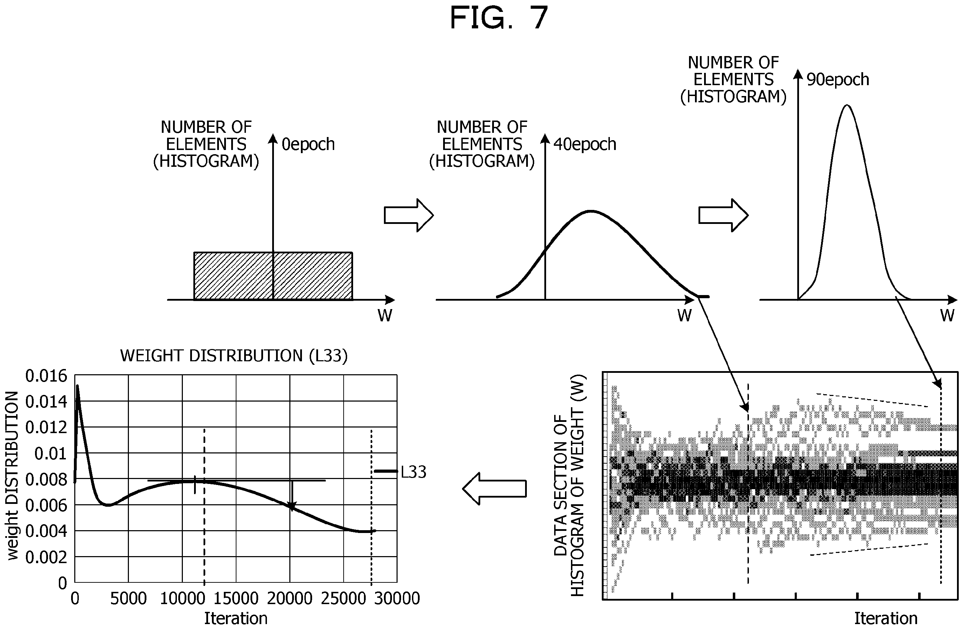

FIG. 7 is a diagram for describing processing of the information processing device 10 according to the example 1. FIG. 7 illustrates a relationship between time course and a change in a histogram of weights that are tensor data (hereinafter may be simply referred to as "tensor") having a plurality of elements, for the weight of the layer 33 (L33). As illustrated in FIG. 7, the elements of the tensor of the weight (W) have fixed values before the start of learning (0 epoch), the variance of the elements of the tensor of the weight (W) is large in the middle of learning (40 epochs), and the variance of the elements of the tensor of the weight (W) at the end of learning (90 epochs) is small and has variance close to a median.

For example, when the histogram of the elements of the tensor of the weight is displayed for a certain layer, the variance of the weight (W) has variance close to the median as the iteration progresses. Therefore, if the variance is small to some extent, it can be determined that the learning is completed. Meanwhile, if learning skip is performed during warm-up processing period (for example, 0 to 3850 iterations) performed in an initial stage of machine learning, convergence of accuracy will be slowed down, and the learning skip during warm-up may adversely affect the accuracy more than a skipped length.

In consideration of the above, the information processing device 10 sets, for each layer of the machine learning model, the threshold at a decrease rate from the peak of the variance of the elements of the tensor of the weight after progressing the warm-up processing, and determines learning skip timing. By doing so, the information processing device 10 can implement a method of setting the start threshold of learning skip that does not depend on the weight (W) or the weight gradient ($\Delta$W) itself, and can implement both the reduction in time to learning convergence and the improvement in accuracy.

[Functional Configuration]

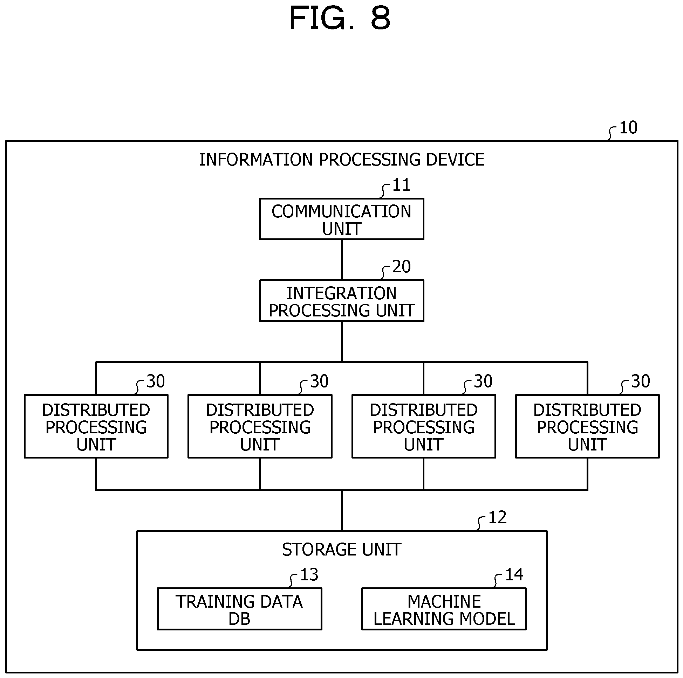

FIG. 8 is a functional block diagram illustrating a functional configuration of the information processing device 10 according to the example 1. As illustrated in FIG. 8, the information processing device 10 includes a communication unit 11, a storage unit 12, an integration processing unit 20, and a plurality of distributed processing units 30.

The communication unit 11 is a processing unit that controls communication with another device, and is implemented by, for example, a communication interface or the like. For example, the communication unit 11 transmits and receives various types of data, various instructions, or the like to and from an administrator's terminal.

The storage unit 12 is a processing unit that stores various types of data, various programs, or the like and is implemented by, for example, a memory, a hard disk, or the like. The storage unit 12 stores a training data DB 13 and a machine learning model 14.

The training data DB 13 is an example of a dataset that stores training data used for machine learning of the machine learning model 14. For example, each piece of the training data stored in the training data DB 13 includes image data and a supervised label. Note that the dataset of the training data can be divided into subsets (batch size) in arbitrary units.

The machine learning model 14 is a model generated by machine learning such as DL and is an example of a model using a multi-layer neural network including a plurality of layers. For example, in a case where image data is input, the machine learning model 14 executes classifying an animal in the image. Note that a DNN, a convolutional neural network (CNN), or the like can be adopted as the machine learning model 14.

The integration processing unit 20 is a processing unit that controls the entire information processing device 10 and is implemented by, for example, a CPU. For example, the integration processing unit 20 instructs each distributed processing unit 30 to, for example, start or terminate the distributed processing of machine learning and machine learning and executes overall control regarding machine learning.

Each distributed processing unit 30 is a processing unit that executes the distributed processing of machine learning and is implemented by, for example, a GPU. For example, each distributed processing unit 30 executes generation of the machine learning model 14 by machine learning using each piece of the training data stored in the training data DB 13 in response to the instruction from the integration processing unit 20.

[Details of Distributed Processing Unit]

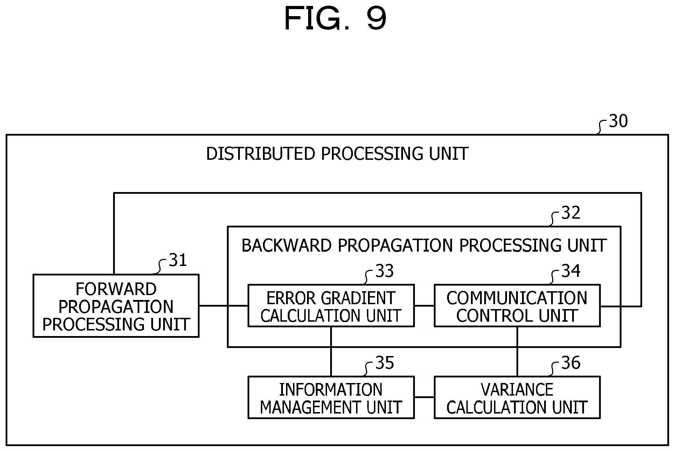

Next, details of each distributed processing unit 30 will be described. Note that each distributed processing unit 30 has a similar configuration. FIG. 9 is a diagram for describing details of the distributed processing unit 30. As illustrated in FIG. 9, the distributed processing unit 30 includes a forward propagation processing unit 31, a backward propagation processing unit 32, an information management unit 35, and a variance calculation unit 36.

The forward propagation processing unit 31 is a processing unit that executes forward propagation processing on each layer of the machine learning model 14. Specifically, since the forward propagation processing unit 31 executes so-called forward propagation, detailed description is omitted. Briefly, for example, the forward propagation processing unit 31 inputs image data that is training data to a top layer (input layer) of the machine learning model 14 and acquires a prediction result (classification result) that is a result of continuously calculating numerical values from the input layer toward the last layer (output layer) of the machine learning model 14 from the output layer. Then, the forward propagation processing unit 31 calculates an error between the prediction result and the supervised label using a squared error or the like, calculates an error function, and outputs the calculated values to the backward propagation processing unit 32.

The backward propagation processing unit 32 is a processing unit that includes an error gradient calculation unit 33 and a communication control unit 34, calculates an error of each parameter of the machine learning model 14 by a backward propagation method using the error function input from the forward propagation processing unit 31, and executes update of the parameter. For example, the backward propagation processing unit 32 executes so-called backward propagation.

For example, the backward propagation processing unit 32 calculates an error gradient of edge weight between nodes of a neural network in an order (reverse order) from the output layer toward the input layer of the machine learning model 14. The error gradient corresponds to a value obtained by partially differentiating an error by a weight in a case where the error is assumed as a function of the weight and represents a change amount of the error when the edge weight is slightly changed. Then, the backward propagation processing unit 32 executes update of each parameter such as each edge weight so as to reduce the error, using the error gradient.

The error gradient calculation unit 33 is a processing unit that calculates an error gradient indicating a gradient of an error with respect to each parameter of the machine learning model 14 and the like for each of the plurality of layers included in the machine learning model 14. For example, the error gradient calculation unit 33 calculates the error gradient (g), weight (W), and momentum (m) for each layer of the machine learning model 14 for each iteration, and outputs these pieces of information to the information management unit 35.

Here, at the time of calculating the error gradient, the error gradient calculation unit 33 suppresses the calculation of the error gradient for a layer determined to suppress learning (learning skip layer). Furthermore, the error gradient calculation unit 33 can set only a specific layer as an error gradient calculation target, a convolutional layer as the error gradient calculation target, or arbitrarily set the error gradient calculation target. Note that various known methods can be adopted as the method for calculating the error gradient and the like.

The communication control unit 34 is a processing unit that executes AllReduce communication between the GPUs. For example, the communication control unit 34 sums the error gradients calculated by the plurality of GPUs for each edge weight by transmitting and receiving the error gradients between the GPUs, and adds up the error gradients of the plurality of GPUs. Update of various parameters of the machine learning model 14 is executed by the backward propagation processing unit 32, using information regarding the error gradient added up in this way.

Furthermore, the communication control unit 34 stops the communication to the skip target layer according to a control instruction by the variance calculation unit 36 to be described below. Furthermore, the communication control unit 34 specifies a layer for which the error gradient calculation and the communication (Allreduce) are continued without stopping learning and a layer for which learning is stopped from among the layers of the machine learning model 14 and controls the communication.

The information management unit 35 is a processing unit that acquires and manages the error gradient (g), weight (W), and momentum (m) from the error gradient calculation unit 33. For example, the information management unit 35 outputs the weight (W) of each layer acquired from the error gradient calculation unit 33 to the variance calculation unit 36.

The variance calculation unit 36 is a processing unit that calculates weight variance updated by machine learning, for each layer included in the machine learning model 14, at a predetermined interval at a time of the machine learning of the machine learning model 14, and determines a suppression target layer for suppressing the machine learning on the basis of a peak value of the variance calculated at the predetermined interval and the variance calculated at the predetermined interval.

Specifically, the variance calculation unit 36 sets a layer closest to the input layer among layers for which learning skip has not been executed as a target layer that is a current learning skip determination target, in the order from the input layer to the output layer. Thereafter, the variance calculation unit 36 executes weight variance calculation and learning skip determination for each layer.

For example, the variance calculation unit 36 calculates the variance of the elements of the tensor of the weight (W) notified from the information management unit 35 for each iteration after the warm-up processing is completed. Next, the variance calculation unit 36 specifies the peak value, using the weight variance that continues to be calculated. After specifying the peak value, the variance calculation unit 36 calculates a difference between the peak value and the weight variance that continues to be calculated, and determines to cause the current target layer to undergo learning skip in a case where the difference becomes equal to or greater than the threshold. Then, the variance calculation unit 36 notifies the communication control unit 34 of a determination result, executes learning skip, determines the next target layer, and repeats the determination.

Here, setting of the threshold will be described. Specifically, the variance calculation unit 36 sets the threshold according to the change in the weight variance. For example, there are three threshold setting patterns: the threshold of the first layer (L0), the threshold in a case where the waveform of the change in the variance is mountain-shaped, and the threshold of which the waveform of the change in the variance is downhill. The variance calculation unit 36 sets a threshold for each pattern based on the degree of decrease from the peak.

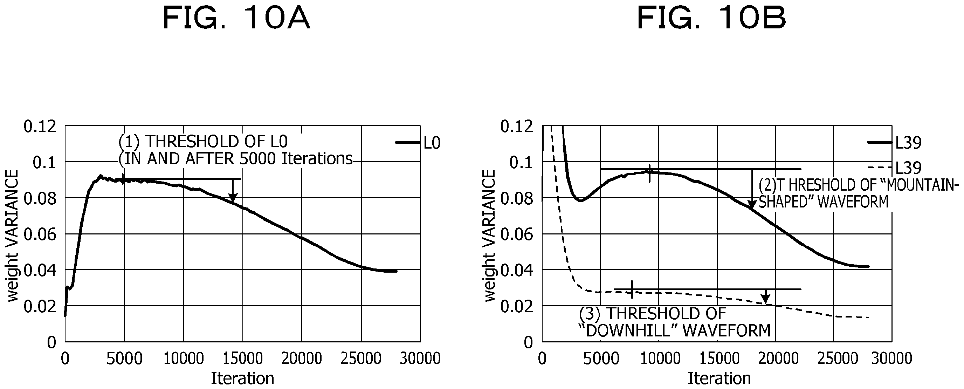

FIGs. 10A and 10B are diagrams for describing setting of the threshold. For the first layer of the machine learning model 14 illustrated in in FIG. 10A, the variance calculation unit 36 sets, for example, a value lowered from the peak by 6% as the threshold. For example, the variance calculation unit 36 sets "0.94" as the threshold in a case where the peak of the variance is "1.0".

Furthermore, for the layer having a mountain-shaped waveform illustrated in FIG. 10B, the variance calculation unit 36 sets, for example, a value lowered from the peak by 4% as the threshold. For example, the variance calculation unit 36 sets "0.96" as the threshold in a case where the peak of the variance is "1.0".

Furthermore, for the layer having a downhill waveform illustrated in FIG. 10B, the variance calculation unit 36 sets, for example, a value lowered from the peak by 2% as the threshold for the layer having the downhill waveform. For example, the variance calculation unit 36 sets variance "0.98" as the threshold in a case where the peak of the variance is "1.0".

This is because the degree of decrease from the peak is different, and the variance calculation unit 36 sets the degree of decrease to satisfy the downhill layer < the mountain-shaped layer < the first layer, as an example. Furthermore, the variance calculation unit 36 may determine that the threshold setting pattern is the mountain-shaped pattern in a case where the variance that continues to be calculated changes between predetermined iterations by a predetermined value or more, and determines that the threshold setting pattern is the downhill pattern otherwise.

Furthermore, the variance calculation unit 36 can also gradually stop learning using the braking distance (BD) of the learning rate in addition to simply performing learning skip, for the layer determined to be the learning skip target.

For example, the variance calculation unit 36 suppresses the learning after lowering the learning rate using the BD that depends on the iteration when a command to stop learning is issued instead of suddenly stopping the learning of the skip candidate layer. More specifically, in a case where an LR scheduler used for learning of the machine learning model 14 is a POW2, the variance calculation unit 36 reduces the BD similarly to the POW2 using the equation (1).

[Math. 1]

$$\text{BD attenuation rate} = ((BD - \text{iteration})/BD)^2$$

$$\text{... Equation (1)}$$

The variance calculation unit 36 gradually reduces the BD that is the braking distance of the LR to 7700 that is the set number of iterations for each iteration by multiplying the attenuation rate indicated in the equation (1) to decrease the learning rate. Note that the BD in the equation (1) is a predetermined set value, and the iteration (iteration) is the number of iterations at the time of calculation.

Here, an example of executing learning skip using the above-described attenuation rate for the layer determined as the learning skip candidate will be described. The variance calculation unit 36 executes machine learning with LR = 5 when warm-up (3850 iterations) is completed. Then, when the layer is determined as the learning skip candidate when the iteration is 7980, the variance calculation unit 36 calculates the LR at the time of the iteration using the equation (2) and executes machine learning using the calculated LR. In this way, the variance calculation unit 36 calculates the LR for each iteration and executes machine learning using the calculated LR.

[Math. 2]

$$LR = \text{End LR} + (\text{LR at the start of BD} - \text{End LR}) \times ((BD - (\text{iter.} -$$

$$\text{iter. at the start of BD}))/BD)^2$$

$$\text{... Equation (2)}$$

Note that "LR" in the equation (2) is the learning rate to be calculated that is used for learning. "End LR" is the LR when it is determined to perform learning skip, and the learning rate is repeatedly attenuated (decreased) until the LR reaches the "End LR". "LR at the start of BD" is the LR at the time of initial setting. "Iter." is the number of iterations at the time of calculation. Since "LR" is calculated for each iteration after the layer is determined as the skip candidate, the number of iterations at that time is adopted. "iter. at the start of BD" is the number of iterations of when the attenuation of the learning rate is started. For example, the BD = 7700 iterations, the warm-up = 3850 iterations, the initial value (Base LR) corresponding to "LR at the start of BD" = 5, the final LR (End LR) = 0.0001, and "iter. at the start of BD" = 7980 iterations are obtained.

As described above, the variance calculation unit 36 gradually lowers the learning rate using the BD that depends on the iteration instead of suddenly stopping learning of the learning skip candidate layer, and performs the learning skip when or after the learning rate becomes the target learning rate. At this time, the variance calculation unit 36 can improve the learning accuracy and reduce the final number of epochs by performing learning skip in the order from the layer closest to the input layer.

[Flow of Processing]

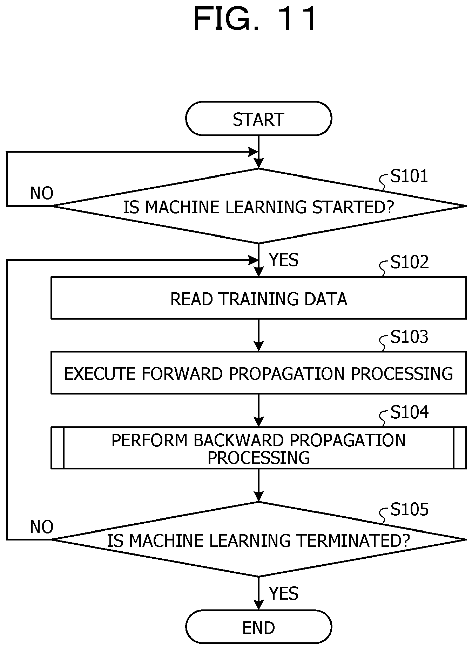

FIG. 11 is a flowchart illustrating a flow of processing according to the example 1. As illustrated in FIG. 11, when the start of machine learning is instructed (S101: Yes), the forward propagation processing unit 31 reads the training data (S102) and executes the forward propagation processing (S103).

Next, the backward propagation processing unit 32, the information management unit 35, and the variance calculation unit 36 execute the backward propagation processing (S104). Thereafter, in the case where the machine learning is continued (S105: No), the processing of S102 and the subsequent steps is executed, and in the case where the machine learning is terminated (S105: Yes), the information processing device 10 terminates the machine learning.

(Flow of Backward Propagation Processing)

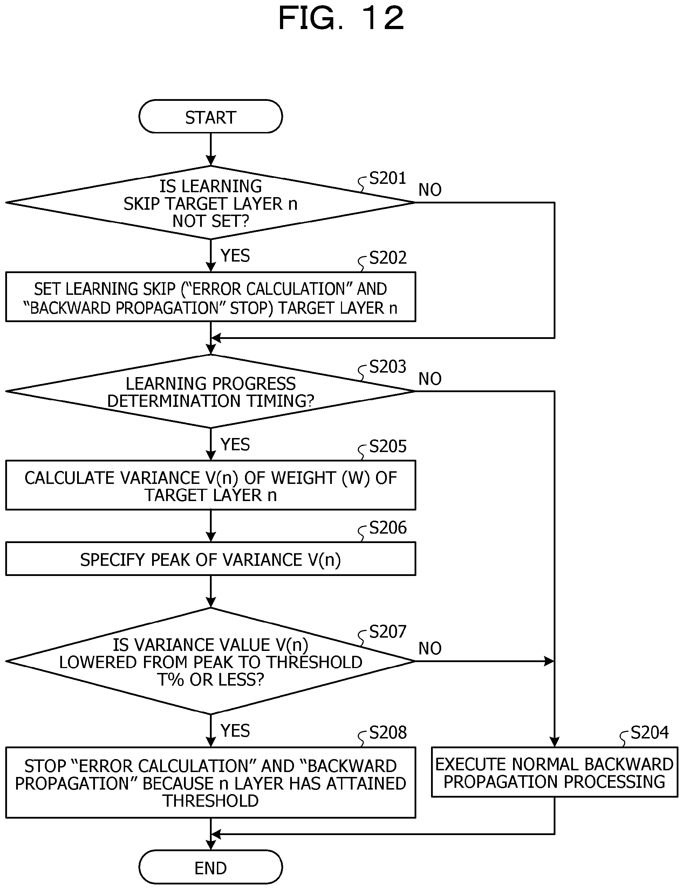

FIG. 12 is a flowchart illustrating a flow of the backward propagation processing. As illustrated in FIG. 12, the variance calculation unit 36 determines whether the target layer n that is the learning skip determination target for stopping the error calculation and the backward propagation is not set (S201), and sets the target layer n that is the learning skip determination target (S202) in the case where the target layer n is not set (S201: Yes).

In the case where the target layer n has already been set (S201: No) or when the target layer n is set (S202), the variance calculation unit 36 determines whether it is the learning progress determination timing (S203). For example, the variance calculation unit 36 determines that it is the learning progress determination timing in the case where the warm-up processing has been completed and after the iteration is completed.

Here, in the case where the variance calculation unit 36 determines that it is not the learning progress determination timing (S203: No), the backward propagation processing unit 32 executes normal backward propagation processing (S204).

On the other hand, in the case of determining that it is the learning progress determination timing (S203: Yes), the variance calculation unit 36 calculates the variance $V(n)$ of the weight $(W)$ of the target layer n (S205). Note that variance $\sigma^2$ is calculated such that, when an expected value (population mean) of a random variable X is $\mu = E(X)$, the expected value $E((X-\mu)^2)$ of the square of the difference between X and the population mean is calculated as the variance of X.

Next, the variance calculation unit 36 obtains the peak of the variance $V(n)$ (S206). For example, the variance calculation unit 36 calculates a weight variance value in or after a certain iteration (here, 5000) and obtains $V_{max}(n)$ with $V_i(n)$ as a variance value of the n layer at the ith learning progress timing. Here, the variance calculation unit 36 sets the "downhill threshold" in a case where a state where the value of "$V_i(n)$-, $V_{i-1}(n)$" is less than 0 ("$V_i(n)$-, $V_{i-1}(n)$" < 0) continues a predetermined number. The variance calculation unit 36 sets the "mountain-shaped threshold" in a case where the value of "$V_i(n)$-, $V_{i-1}(n)$" changes from a state of being larger than 0 ("$V_i(n)$-, $V_{i-1}(n)$" > 0) to less than 0 ("$V_i(n)$-, $V_{i-1}(n)$" < 0).

Thereafter, the variance calculation unit 36 determines whether the variance $V(n)$ is lowered from the peak to the threshold T% or less (S207). Here, in the case where the variance $V(n)$ is lowered from the peak to the threshold T% or less (S207: Yes), the variance calculation unit 36 determines to perform learning skip because the n layer has attained the threshold (S208). On the other hand, when the variance $V(n)$ is not lowered from the peak to the threshold T% or less (S207: No), the variance calculation unit 36 executes the normal backward propagation processing because the n layer has not attained the threshold (S204). For example, the variance calculation unit 36 determines to perform learning skip in the case where "$(V_i(n)/V_{max}(n))$ < the threshold" is satisfied.

[Effects]

As described above, the information processing device 10 focuses on the fact that the variation of the weight W decreases as the learning progresses, and determines whether to perform learning skip according to the decrease rate of the variance value from the peak, using the weight $(W)$ or the weight gradient $(\Delta W)$ in the determination of the learning progress. As a result, since the hyperparameter is only the variance value, the threshold can be specified in a short time and automation can be easily performed. For example, even in the case of normally determining the parameter by 60 times of execution, experimental results from which the parameter can be determined can also be obtained by about 5 times of execution by using the method of the example 1.

[Example 2]

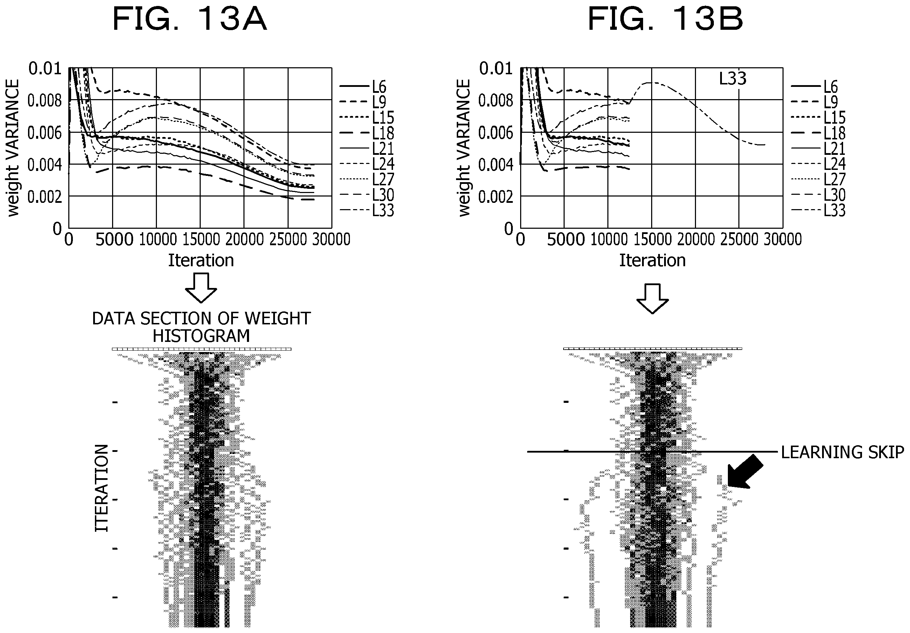

By the way, an influence of learning skip on a next layer in a case where learning stop is executed by learning skip for a certain layer will be described. FIGs. 13A and 13B are diagrams for describing an influence on a subsequent layer of a stopped layer. FIG. 13A illustrates histograms of weight variance of thirty three layers in order to examine the influence of the 33rd layer immediately after learning skip is performed up to the 30th layer in a convolution (conv) layer.

As illustrated in FIG. 13A, there is no particular influence on L33 in the case of not causing L30 to undergo learning skip because of normal backward propagation processing. Meanwhile, as illustrated in FIG. 13B, the variance of the weight (W) of L33 rises in a mountain shape in the case of causing L30 to undergo learning skip. For example, as illustrated by the arrow on a heatmap of the weight histogram, it can be confirmed that spread is depicted from around a point where learning skip is performed.

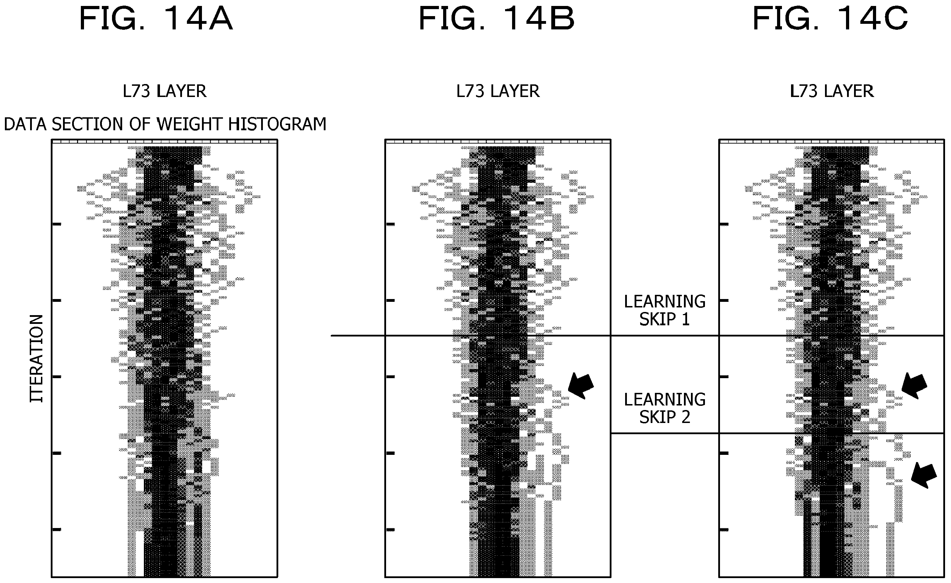

Furthermore, FIG. 14 (i.e., FIGs. 14A through 14C) illustrate diagrams for describing an influence on a subsequent layer in a case of performing learning skip a plurality of times. FIG. 14 illustrates histograms of weight variance of seventy two layers in order to examine the influence of the 72nd layer immediately after learning skip is performed up to the 69th layer in a conv layer.

As illustrated in FIG. 14A, there is no particular influence on L72 in the case of not causing L69 to undergo learning skip because of normal backward propagation processing. Furthermore, as illustrated in in FIG. 14B, in a case where learning skip of L69 is performed once, it can be confirmed that spread is depicted from around a point where learning skip is performed, as illustrated by the arrow. Furthermore, as illustrated in FIG. 14C, in a case where learning skip of L69 is performed twice, it can be confirmed in both the first and second times that spread is depicted from around points where learning skip is performed, as illustrated by the arrows. For example, although the weight variance is almost unaffected, the spread from the point where learning skip is performed can be confirmed even in the heatmap of the weight histogram.

As described above, since the variance spreads once in the layer immediately after the layer in which the learning skip is executed, learning skip may occur in a state of peak misidentification or insufficient learning in the method of the example 1. Therefore, not to decrease final learning accuracy after the learning skip, threshold determination timing is improved.

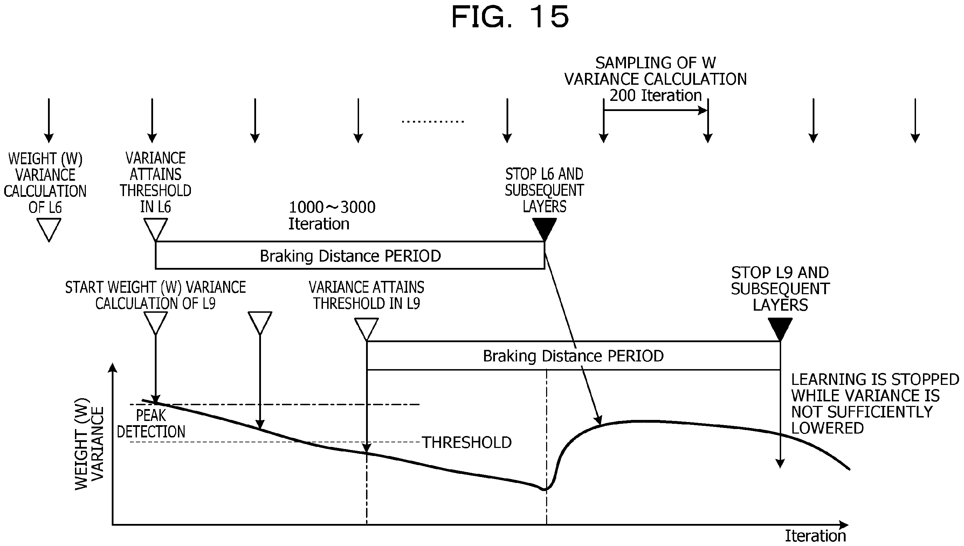

FIG. 15 is a diagram for describing an improvement point of the threshold determination timing. In FIG. 15, a learning skip control example using a BD period will be described, but the same similarly applies to normal learning skip. Furthermore, sampling of weight variance calculation is 200 iterations, and the BD period is from 1000 to 3000 iterations.

As illustrated in FIG. 15, a variance calculation unit 36 starts variance calculation of a weight W of L6, and sets a BD period and gradually stops learning of L6 when the variance of the weight W attains a threshold. Meanwhile, the variance calculation unit 36 starts weight variance calculation of L9 at timing when the weight variance of L6 has attained the threshold. Moreover, the variance calculation unit 36 sets the BD period for L9 and gradually stops learning of L9 when the weight variance of L9 attains the threshold in the BD period of L6. For example, an overlapping period occurs between the BD period of L6 and the BD period of L9.

However, when the BD period of L6 ends and the learning of L6 ends during the BD period of L9, the weight variance of L9 spreads even during the BD period of L9, as described in FIGs. 13 and 14. For example, since the BD period > a variance sampling interval, a variance value of L9 may become mountain-shaped due to the influence of the learning stop of the previous layer (L6) after reaching the threshold in L9. As a result, learning of L9 is stopped when the weight variance of L9 is not sufficiently reduced, in other words, during learning, which may cause a decrease in accuracy of a final machine learning model 14.

Therefore, to improve the improvement point of FIG. 15, the information processing device 10 according to an example 2 controls each layer so as not to execute threshold determination and variance calculation for the subsequent layers during the BD period.

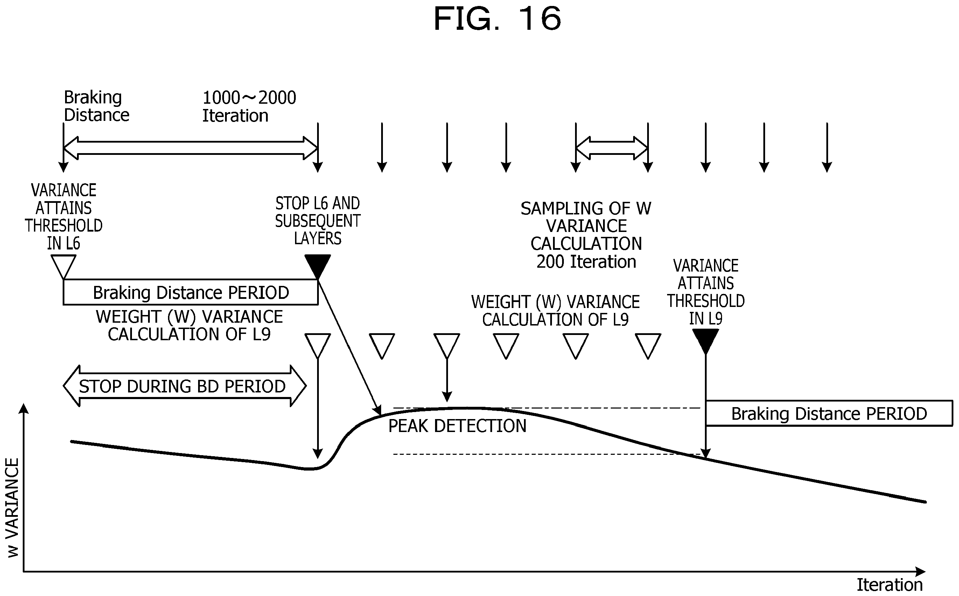

FIG. 16 is a diagram for describing improvement in the threshold determination timing. In FIG. 16, as in FIG. 15, a learning skip control example using the BD period will be described, but the same similarly applies to normal learning skip. Furthermore, sampling of weight variance calculation is 200 iterations, and the BD period is from 1000 to 3000 iterations.

As illustrated in FIG. 16, the variance calculation unit 36 starts variance calculation of the weight W of L6, and sets the BD period and gradually stops learning of L6 when the variance attains the threshold. At this time, the variance calculation unit 36 suppresses the variance calculation of the weight of L9 because of during the BD period even at the timing when the weight of L6 has attained the threshold. For example, control is performed not to cause the overlapping period between the BD period of L6 and the BD period of L9.

Then, the variance calculation unit 36 starts the variance calculation of the weight W of L9 at the timing when the BD period of L6 has ended, sets the BD period of L9 when the weight attains the threshold, and gradually stops learning of L9.

In this way, the variance calculation unit 36 suppresses the weight variance calculation for the subsequent layers during the BD period, and becomes able to perform learning skip of L9 after detecting a decrease in the weight variance including the influence of L6 in the layer (L9) next to L6. As a result, the information processing device 10 can improve the accuracy of the final machine learning model 14.

[Example 3]

Next, variations of learning skip and threshold determination timing control executed by an information processing device 10 will be described.

[Variance Calculation According to BD Cycle]

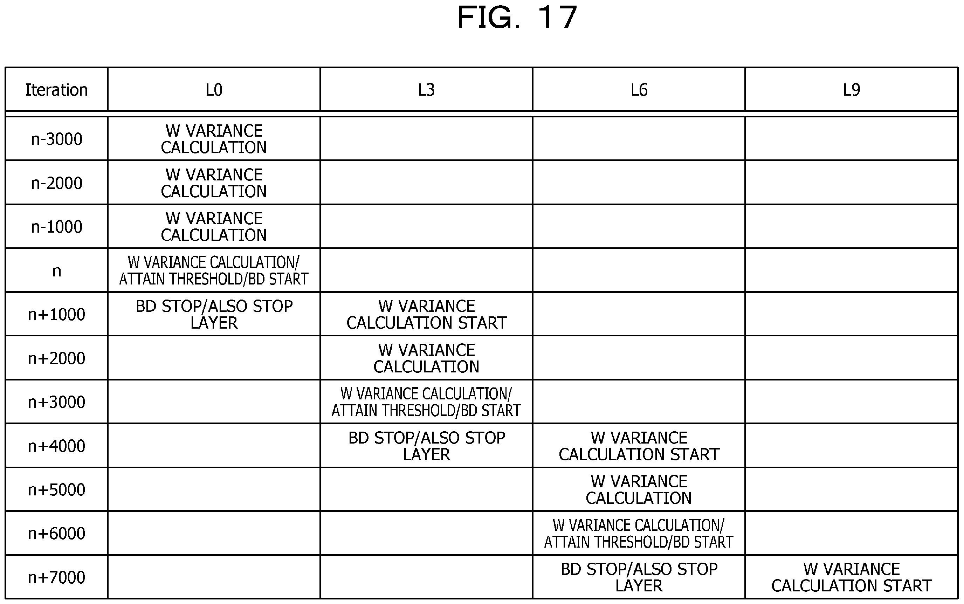

FIG. 17 is a diagram for describing implementation of variance calculation according to a BD cycle. In FIG. 17, a target layer for performing variance calculation is one layer from L0 and L3 layers onwards, and the next layer becomes a variance calculation target after a variance target layer attains a threshold.

As illustrated in FIG. 17, a distributed processing unit 30 starts variance calculation of a weight (W) in iteration "n - 3000" where machine learning is started and a warm-up period ends, for L0 that is the first layer (conv layer) of a machine learning model, and executes variance calculation of the weight (W) for each iteration of iteration "n - 2000" and iteration "n - 1000". Then, when the variance of the weight (W) calculated in the iteration "n" attains a threshold, the distributed processing unit 30 starts learning skip by BD control. Thereafter, the BD period of L0 ends in the iteration "n + 1000" and the distributed processing unit 30 stops learning of L0.

At this time, since the learning of L0 is stopped in the iteration "n + 1000", the distributed processing unit 30 starts weight variance calculation for L3, which is the next layer of L0, from the iteration "n + 1000" as the same timing. Then, the distributed processing unit 30 executes weight variance of L3 even in the iteration "n + 2000", and starts learning skip by BD control for L3 when the variance of the weight (W) calculated in the iteration "n + 3000" attains the threshold.

Thereafter, the BD period of L3 ends in iteration "n + 4000" and the distributed processing unit 30 stops learning of L3. At this time, since the learning of L3 is stopped in the iteration "n + 4000", the distributed processing unit 30 starts weight variance calculation for L6, which is the next layer of L3, from the iteration "n + 4000" as the same timing.

Then, the distributed processing unit 30 executes weight variance of L6 even in iteration "n + 5000", and starts learning skip by BD control for L6 when the variance of the weight (W) calculated in the iteration "n + 6000" attains the threshold.

Thereafter, the BD period of L6 ends in iteration "n + 7000" and the distributed processing unit 30 stops learning of L6. At this time, since the learning of L6 is stopped in the iteration "n + 7000", the distributed processing unit 30 starts weight variance calculation for L9, which is the next layer of L6, from the iteration "n + 7000" as the same timing.

In this way, the distributed processing unit 30 can cope with an influence on L3 by variance calculation of L3 even in a case where the braking distance (BD) period of L0 ends and an influence by learning stop of a layer is actually reflected on L3, for example, by adjusting a width of BD to a variance calculation cycle. As a result, the distributed processing unit 30 reliably stops learning for each layer and thus can suppress accuracy deterioration.

[Example 1 of Dealing with Plurality of Layers]

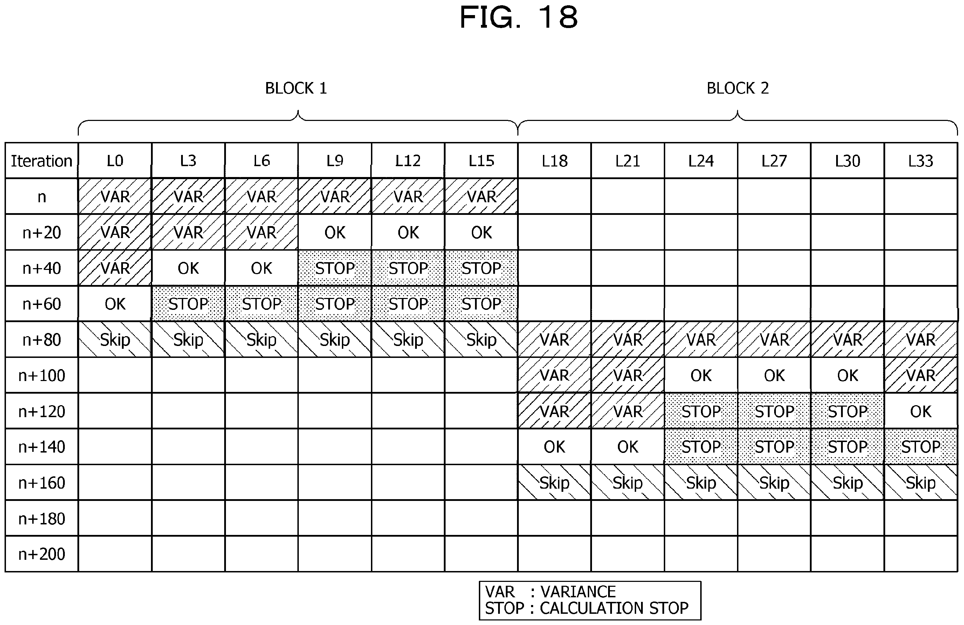

FIG. 18 is a diagram for describing implementation of learning skip in which a plurality of layers is put together. As illustrated in FIG. 18, in the distributed processing unit 30, L0, L3, L6, L9, L12, and L15 are collectively referred to as a block 1, and L18, L21, L24, L27, L30, and L33 are collectively referred to as a block 2. Then, the distributed processing unit 30 controls learning skip for each block.

Specifically, the distributed processing unit 30 starts variance calculation of the weight (W) of each layer of the block 1 in the iteration "n" where the machine learning is started and the warm-up period ends. Then, when detecting that the weight variance of L9, L12, and L15 has attained the threshold in the weight variance of each layer calculated in iteration "n + 20", the distributed processing unit 30 stops subsequent weight variance calculation of L9, L12, and L15.

Thereafter, when detecting that the weight variance of L3 and L6 has attained the threshold in the weight variance of each layer (L0, L3, or L6) calculated in iteration "n + 40", the distributed processing unit 30 stops subsequent variance calculation of L3 and L6.

Thereafter, when detecting that the weight variance of L0 calculated in iteration "n + 60" has attained the threshold, the distributed processing unit 30 stops subsequent variance calculation of L0. As a result, since the weights of all the layers in the block 1 have attained the threshold, the distributed processing unit 30 executes learning skip for each layer of the block 1 from the next iteration "n + 80" and starts weight variance calculation of each layer in the block 2.

In this way, the distributed processing unit 30 stops the weight variance calculation in the case where the weight has attained the threshold, and can perform learning skip for target layers in the case where all the plurality of layers as calculation targets have fallen within the threshold range. Furthermore, the distributed processing unit 30 can increase the number of layers to undergo learning skip at one time by varying the number of target layers included in a block. Therefore, the distributed processing unit 30 can simultaneously perform weight variance calculation for a plurality of layers from an input side of a machine learning model 14 (neural network) and increase the number of layers to undergo learning skip, and thus can implement speed-up of machine learning.

[Example 2 of Dealing with Plurality of Layers]

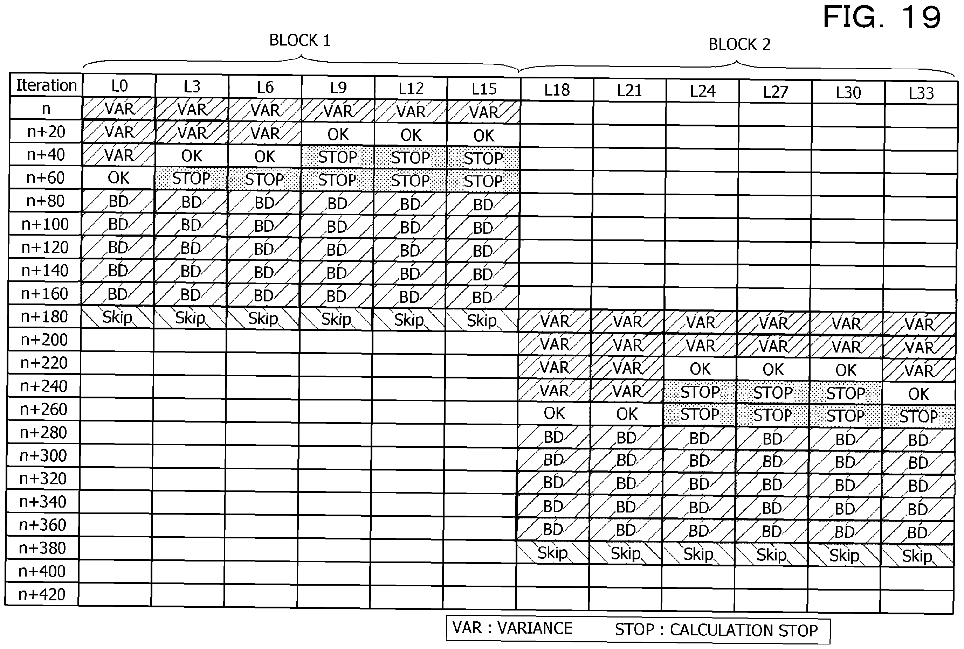

FIG. 19 is a diagram for describing implementation of BD control in which a plurality of layers is put together. As illustrated in FIG. 19, in the distributed processing unit 30, L0, L3, L6, L9, L12, and L15 are collectively referred to as a block 1, and L18, L21, L24, L27, L30, and L33 are collectively referred to as a block 2. Then, the distributed processing unit 30 controls learning skip for each block.

Specifically, the distributed processing unit 30 starts variance calculation of the weight (W) of each layer of the block 1 in the iteration "n" where the machine learning is started and the warm-up period ends. Then, when detecting that the weight variance of L9, L12, and L15 has attained the threshold in the weight variance of each layer calculated in iteration "n + 20", the distributed processing unit 30 stops subsequent weight variance calculation of L9, L12, and L15.

Thereafter, when detecting that the weight variance of L3 and L6 has attained the threshold in the weight variance of each layer (L0, L3, or L6) calculated in iteration "n + 40", the distributed processing unit 30 stops subsequent variance calculation of L3 and L6.

Thereafter, when detecting that the weight variance of L0 calculated in iteration "n + 60" has attained the threshold, the distributed processing unit 30 stops subsequent variance calculation of L0. As a result, since the weights of all the layers in the block 1 have attained the threshold, the distributed processing unit 30 executes learning skip for each layer of the block 1 from the next iteration "n + 80" by BD control.

Then, the distributed processing unit 30 executes learning skip of gradually lowering an LR from the iteration "n + 80" to "n + 160", which is the BD period, and the BD period ends in iteration "n + 180" and the learning skip of each layer in the block 1 is completed. Here, the distributed processing unit 30 starts weight variance calculation of each layer in the block 2 in the iteration "n + 180" because the learning skip of each layer in the block 1 is completed in the iteration "n + 180".

In this way, the distributed processing unit 30 stops the weight variance calculation in the case where the weight has attained the threshold, and can set the BD period and perform learning skip for target layers in the case where all the plurality of layers as calculation targets have fallen within the threshold range. Therefore, the distributed processing unit 30 can achieve both the speed-up of machine learning and suppression of accuracy deterioration.

[Example 4]

While the examples of the present embodiment have been described above, the present embodiment may be implemented in various different modes in addition to the above-described examples.

[Numerical Values, etc.]

The number of blocks, the number of layers, various thresholds, numerical values, the number of GPUs, or the like used in the above-described examples are merely examples, and can be arbitrarily changed. Furthermore, the learning rate can be not only decreased but also increased. Further, the determination of learning skip is not limited to each iteration, but can be determined for each epoch. Note that it is preferable that the same scheduler be used as the LR scheduler and the scheduler that controls the learning rate.

Furthermore, the weight variance calculation timing is not limited to each iteration, but can be arbitrarily set or changed for each predetermined number of training data, for each epoch, or the like. Furthermore, although the examples of using the weight variance as the weight information have been described, variance of the weight gradient can also be used.

[Block Control, etc.]

For example, in the above-described example, it is possible to determine whether a layer is the skip target according to whether the error gradient of the final layer among the layers belonging to the block or an average value of the weight variance of the layers belonging to the block is less than the threshold.

[BD Setting Example]

In the above-described examples, the same BD period can be set or different BD periods can be set for each layer or each block. For example, to a block close to the output layer in which machine learning is stopped in a state where the machine learning is progressed, a BD period shorter than a block close to the input layer in which the machine learning is stopped at a relatively early stage can be set.

[System]

Pieces of information including a processing procedure, a control procedure, a specific name, various types of data, and parameters described above or illustrated in the drawings may be optionally changed unless otherwise specified.

Furthermore, each component of each device illustrated in the drawings is functionally conceptual, and is not always physically configured as illustrated in the drawings. For example, specific forms of distribution and integration of individual devices are not limited to those illustrated in the drawings. For example, all or a part of the devices may be configured by being functionally or physically distributed or integrated in optional units depending on various loads, use status, or the like.

Moreover, all or an optional part of individual processing functions performed in each device may be implemented by a central processing unit (CPU) and a program analyzed and executed by the CPU or may be implemented as hardware by wired logic.

[Hardware]

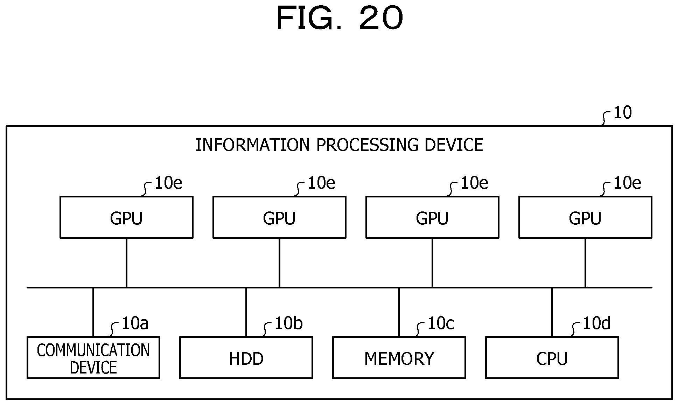

Next, a hardware configuration example of the information processing device 10 described in the above examples will be described. FIG. 20 is a diagram for describing a hardware configuration example. As illustrated in FIG. 20, the information processing device 10 includes a communication device 10a, a hard disk drive (HDD) 10b, a memory 10c, a CPU 10d, and a plurality of GPUs 10e. Furthermore, the respective units illustrated in FIG. 20 are mutually connected by a bus or the like.

The communication device 10a is a network interface card or the like, and communicates with another server. The HDD 10b stores a program that activates the functions illustrated in FIG. 8, 9, or the like and a DB.

The CPU 10d controls the entire information processing device 10 and, for example, each GPU 10e that operates each process of machine learning by reading a program regarding machine learning from the HDD 10b or the like and expanding the program to the memory 10c operates the process for executing each function described with reference to FIG. 8, 9 or the like by reading a program for executing processing similar to each processing unit illustrated in FIG. 8, 9 or the like from the HDD 10b or the like and expanding the program to the memory 10c. For example, each GPU 10e reads a program having functions similar to the forward propagation processing unit 31, the backward propagation processing unit 32, the information management unit 35, the variance calculation unit 36, and the like from the HDD 10b or the like. Then, each GPU 10e executes a process for executing processing similar to the forward propagation processing unit 31, the backward propagation processing unit 32, the information management unit 35, the variance calculation unit 36, and the like.

As described above, the information processing device 10 operates as an information processing device that executes various processing methods by reading and executing the program. Furthermore, the information processing device 10 may also implement functions similar to the functions of the above-described examples by reading the above-described program from a recording medium by a medium reading device and executing the above-described read program. Note that the program referred to in other examples is not limited to being executed by the information processing device 10. For example, the present embodiment may be similarly applied also to a case where another computer or server executes the program, or a case where these computer and server cooperatively execute the program.

This program may be distributed via a network such as the Internet. Furthermore, this program may be recorded in a computer-readable recording medium such as a hard disk, flexible disk (FD), compact disc read only memory (CD-ROM), magneto-optical disk (MO), or digital versatile disc (DVD), and may be executed by being read from the recording medium by a computer.

**Claims**

1. A speed-up program comprising instructions which, when executed by a computer, cause the computer to execute processing comprising:

    calculating variance of weight information regarding a weight updated by machine learning, for each layer included in a machine learning model at a predetermined interval at time of the machine learning of the machine learning model; and

determining a suppression target layer that suppresses the machine learning on the basis of a peak value of the variance calculated at the predetermined interval and the variance of the weight information calculated at the predetermined interval.

2. The speed-up program according to claim 1, wherein

the processing of calculating includes
calculating the variance of the weight information for the each layer, for each iteration as the predetermined interval, and
the processing of determining includes
specifying, for the each layer, a waveform pattern of the variance of the weight information on the basis of a tendency of the variance of the weight information calculated for the each iteration,
setting a threshold according to the waveform pattern for the each layer, and
determining a layer in which a difference between the peak value of the variance and the variance of the weight information calculated at the predetermined interval is equal to or larger than the threshold, as the suppression target layer.

3. The speed-up program according to claim 1 or 2, wherein

the processing of determining includes
selecting a target layer that determines the suppression target layer in order from an input layer of the machine learning model, and
determining, for the target layer, whether to suppress the machine learning for the each predetermined interval on the basis of the peak value of the variance and the variance of the weight information.

4. The speed-up program according to claim 3, wherein

the processing of calculating
starts the calculation of the variance of the weight information for a second layer located next to a first layer determined as the suppression target layer after the machine learning of the first layer is stopped, of a plurality of layers included in the machine learning model.

5. The speed-up program according to claim 1 or 2, wherein

the processing of calculating includes
dividing a plurality of layers included in the machine learning model into a plurality of blocks in order from an input layer, and
calculating the variance of the weight information for each layer that belongs to each of the plurality of blocks, and
the processing of determining includes
selecting a target block that determines the suppression target layer in order close to an input of the machine learning model, and
suppressing, for the target block, the machine learning of each layer that belongs to the target block in a case where a difference between the peak value of the variance of the each layer that belongs to the target block and the variance of the weight information becomes equal to or larger than a threshold.

6. The speed-up program according to claim 5, wherein

the processing of calculating
starts the calculation of the variance of the weight information for a second block located next to a first block determined as the suppression target layer after the machine learning of the first block is stopped, of the plurality of block layers.

7. The speed-up program according to claim 1, wherein

the processing of determining
decreases a learning rate for each iteration and executes the machine learning during a fixed period until the machine learning is suppressed, for the suppression target layer that suppresses the machine learning.

8.  A computer-implemented method of a speed-up processing, the method comprising:

   calculating variance of weight information regarding a weight updated by machine learning, for each layer included in a machine learning model at a predetermined interval at time of the machine learning of the machine learning model; and
   determining a suppression target layer that suppresses the machine learning on the basis of a peak value of the variance calculated at the predetermined interval and the variance of the weight information calculated at the predetermined interval.

9.  An information processing apparatus comprising:

   a memory; and
   a processor coupled to the memory, the processor being configured to perform processing, the processing including:

      calculating variance of weight information regarding a weight updated by machine learning, for each layer included in a machine learning model at a predetermined interval at time of the machine learning of the machine learning model; and
      determining a suppression target layer that suppresses the machine learning on the basis of a peak value of the variance calculated at the predetermined interval and the variance of the weight information calculated at the predetermined interval.

# FIG. 1

INFORMATION PROCESSING DEVICE ⌐10

INTEGRATION PROCESSING

CPU

| GPU | GPU | GPU | GPU |
|-----|-----|-----|-----|
| MACHINE LEARNING PROCESSING | MACHINE LEARNING PROCESSING | MACHINE LEARNING PROCESSING | MACHINE LEARNING PROCESSING |

# FIG. 2

# FIG. 3

FORWARD PROPAGATION

INPUT
LAYER

OUTPUT
LAYER

BACKWARD PROPAGATION

FORWARD PROPAGATION

INPUT
LAYER

OUTPUT
LAYER

BACKWARD PROPAGATION

EP 4 148 630 A1

# FIG. 4

MACHINE LEARNING MODEL

INPUT
SIDE

FIRST BLOCK

SECOND BLOCK

THIRD BLOCK

FOURTH BLOCK

FIFTH BLOCK

OUTPUT
SIDE

LEARNING RATE CURVE WHEN LEARNING IS
NOT STOPPED
(CASE ASSUMING ALL OF LAYERS ARE SAME)

LR

epoch

BD    BD    BD    BD    BD

FIG. 5

$$W_{l+1} - W_l = \underbrace{LR * \Delta W_l - (W_l * LR * Decay) + mom * V_{l-1}}_{V_l}$$

$$※mom: 0.875$$

⬇

$$momentum = mom \times V_l = mom \times (LR * \Delta W_l - (W_l * LR * Decay) + mom * V_{l-1})$$

⬇

$$weight\_norm = \sqrt{\sum_{k=1}^{n} W_k^2} \quad g\_weight\_norm = \sqrt{\sum_{k=1}^{n} \Delta W_k^2} \quad momentum\_norm = \sqrt{\sum_{k=1}^{l} (mom \times V_l)^2}$$

⬇

$$\text{DETERMINATION INDEX} = LR * g\_weight\_norm - (weight\_norm * LR * Decay) + momentum\_norm$$

EP 4 148 630 A1

# FIG. 6

TENDENCY OF EVALUATION INDEX

# FIG. 7

NUMBER OF ELEMENTS (HISTOGRAM) 0epoch

W

NUMBER OF ELEMENTS (HISTOGRAM) 40epoch

W

NUMBER OF ELEMENTS (HISTOGRAM) 90epoch

W

WEIGHT DISTRIBUTION (L33)

weight DISTRIBUTION

0.016
0.014
0.012
0.01
0.008
0.006
0.004
0.002
0

0   5000   10000   15000   20000   25000   30000
Iteration

L33

DATA SECTION OF HISTOGRAM OF WEIGHT (W)

Iteration

EP 4 148 630 A1

# FIG. 8

INFORMATION PROCESSING DEVICE ⌐10

COMMUNICATION UNIT ⌐11

INTEGRATION PROCESSING UNIT ⌐20

DISTRIBUTED PROCESSING UNIT ⌐30

DISTRIBUTED PROCESSING UNIT ⌐30

DISTRIBUTED PROCESSING UNIT ⌐30

DISTRIBUTED PROCESSING UNIT ⌐30

STORAGE UNIT ⌐12

TRAINING DATA DB ⌐13

MACHINE LEARNING MODEL ⌐14

# FIG. 9

DISTRIBUTED PROCESSING UNIT ⌐30

BACKWARD PROPAGATION PROCESSING UNIT ⌐32

FORWARD PROPAGATION PROCESSING UNIT ⌐31

ERROR GRADIENT CALCULATION UNIT ⌐33

COMMUNICATION CONTROL UNIT ⌐34

INFORMATION MANAGEMENT UNIT ⌐35

VARIANCE CALCULATION UNIT ⌐36

FIG. 10A

FIG. 10B

# FIG. 11

```
                    START

                      │
         ┌────────────┤
     NO  │            ▼                        S101
    ┌────┤    IS MACHINE LEARNING STARTED?
    │    └────────────┬───────────────────────
    │                 │ YES                    S102
    │        ┌────────▼─────────────┐
    │        │   READ TRAINING DATA  │
    │        └────────┬─────────────┘
    │                 │                         S103
    │        ┌────────▼──────────────────────┐
    │        │ EXECUTE FORWARD PROPAGATION    │
    │        │          PROCESSING            │
    │        └────────┬──────────────────────┘
    │                 │                         S104
    │        ┌────────▼──────────────────────┐
    │        │ PERFORM BACKWARD PROPAGATION   │
    │        │          PROCESSING            │
    │        └────────┬──────────────────────┘
    │                 │                         S105
    │  NO             ▼
    └────┤ IS MACHINE LEARNING TERMINATED?
         └────────────┬───────────────────────
                      │ YES
                      ▼
                     END
```

# FIG. 12

```
                    ┌──────────────┐
                    │    START     │
                    └──────┬───────┘
                           │
                           ▼
              ╱────────────────────────╲        S201
             ╱      IS LEARNING          ╲              NO
            ╱    SKIP TARGET LAYER n       ╲──────────────────┐
            ╲         NOT SET?             ╱                   │
             ╲                            ╱                    │
              ╲────────────┬────────────╱                     │
                           │ YES              S202             │
                           ▼                                  │
        ┌──────────────────────────────────────────┐         │
        │ SET LEARNING SKIP ("ERROR CALCULATION" AND│         │
        │ "BACKWARD PROPAGATION" STOP) TARGET LAYER n│         │
        └──────────────────┬───────────────────────┘         │
                           │◄─────────────────────────────────┘
                           ▼
              ╱────────────────────────╲        S203
             ╱   LEARNING PROGRESS       ╲            NO
            ╱  DETERMINATION TIMING?       ╲──────────────────┐
             ╲                            ╱                    │
              ╲────────────┬────────────╱                     │
                           │ YES              S205             │
                           ▼                                  │
        ┌──────────────────────────────────────────┐         │
        │ CALCULATE VARIANCE V(n) OF WEIGHT (W) OF  │         │
        │            TARGET LAYER n                 │         │
        └──────────────────┬───────────────────────┘         │
                           │                  S206            │
                           ▼                                  │
        ┌──────────────────────────────────────────┐         │
        │       SPECIFY PEAK OF VARIANCE V(n)       │         │
        └──────────────────┬───────────────────────┘         │
                           │                                  │
                           ▼                                  │
              ╱────────────────────────╲        S207          │
             ╱   IS VARIANCE VALUE V(n)  ╲          NO         │
            ╱ LOWERED FROM PEAK TO THRESHOLD╲─────────────────┤
            ╲       T% OR LESS?            ╱                   │
             ╲                            ╱                    │
              ╲────────────┬────────────╱                     │
                           │ YES              S208        S204 ▼
        ┌──────────────────────────────────────────┐  ┌─────────────────────────┐
        │ STOP "ERROR CALCULATION" AND "BACKWARD    │  │ EXECUTE NORMAL BACKWARD │
        │ PROPAGATION" BECAUSE n LAYER HAS ATTAINED │  │ PROPAGATION PROCESSING  │
        │              THRESHOLD                    │  └────────────┬────────────┘
        └──────────────────┬───────────────────────┘               │
                           │◄──────────────────────────────────────┘
                           ▼
                    ┌──────────────┐
                    │     END      │
                    └──────────────┘
```

FIG. 13A

FIG. 13B

DATA SECTION OF WEIGHT
HISTOGRAM

LEARNING SKIP

# FIG. 14A

# FIG. 14B

# FIG. 14C

L73 LAYER

L73 LAYER

L73 LAYER

DATA SECTION OF WEIGHT HISTOGRAM

ITERATION

LEARNING
SKIP 1

LEARNING
SKIP 2

EP 4 148 630 A1

FIG. 15

# FIG. 16

Braking Distance

1000~2000 Iteration

VARIANCE ATTAINS THRESHOLD IN L6

STOP L6 AND SUBSEQUENT LAYERS

SAMPLING OF W VARIANCE CALCULATION 200 Iteration

VARIANCE ATTAINS THRESHOLD IN L9

Braking Distance PERIOD

WEIGHT (W) VARIANCE CALCULATION OF L9

WEIGHT (W) VARIANCE CALCULATION OF L9

STOP DURING BD PERIOD

PEAK DETECTION

Braking Distance PERIOD

w VARIANCE

Iteration

EP 4 148 630 A1

## FIG. 17

| Iteration | L0 | L3 | L6 | L9 |
|---|---|---|---|---|
| n-3000 | W VARIANCE CALCULATION | | | |
| n-2000 | W VARIANCE CALCULATION | | | |
| n-1000 | W VARIANCE CALCULATION | | | |
| n | W VARIANCE CALCULATION/ATTAIN THRESHOLD/BD START | | | |
| n+1000 | BD STOP/ALSO STOP LAYER | W VARIANCE CALCULATION START | | |
| n+2000 | | W VARIANCE CALCULATION | | |
| n+3000 | | W VARIANCE CALCULATION/ATTAIN THRESHOLD/BD START | | |
| n+4000 | | BD STOP/ALSO STOP LAYER | W VARIANCE CALCULATION START | |
| n+5000 | | | W VARIANCE CALCULATION | |
| n+6000 | | | W VARIANCE CALCULATION/ATTAIN THRESHOLD/BD START | |
| n+7000 | | | BD STOP/ALSO STOP LAYER | W VARIANCE CALCULATION START |

# FIG. 18

| Iteration | L0 | L3 | L6 | L9 | L12 | L15 | L18 | L21 | L24 | L27 | L30 | L33 |
|---|---|---|---|---|---|---|---|---|---|---|---|---|
| | BLOCK 1 | | | | | | BLOCK 2 | | | | | |
| n | VAR | VAR | VAR | VAR | VAR | VAR | | | | | | |
| n+20 | VAR | VAR | VAR | OK | OK | OK | | | | | | |
| n+40 | VAR | OK | OK | STOP | STOP | STOP | | | | | | |
| n+60 | OK | STOP | STOP | STOP | STOP | STOP | | | | | | |
| n+80 | Skip | Skip | Skip | Skip | Skip | Skip | VAR | VAR | VAR | VAR | VAR | VAR |
| n+100 | | | | | | | VAR | VAR | OK | OK | OK | VAR |
| n+120 | | | | | | | VAR | VAR | STOP | STOP | STOP | OK |
| n+140 | | | | | | | OK | OK | STOP | STOP | STOP | STOP |
| n+160 | | | | | | | Skip | Skip | Skip | Skip | Skip | Skip |
| n+180 | | | | | | | | | | | | |
| n+200 | | | | | | | | | | | | |

VAR : VARIANCE
STOP : CALCULATION STOP

EP 4 148 630 A1

FIG. 19

|  | BLOCK 1 | | | | | | BLOCK 2 | | | | | |
|---|---|---|---|---|---|---|---|---|---|---|---|---|
| Iteration | L0 | L3 | L6 | L9 | L12 | L15 | L18 | L21 | L24 | L27 | L30 | L33 |
| n | VAR | VAR | VAR | VAR | VAR | VAR | | | | | | |
| n+20 | VAR | VAR | VAR | OK | OK | OK | | | | | | |
| n+40 | VAR | OK | OK | STOP | STOP | STOP | | | | | | |
| n+60 | OK | STOP | STOP | STOP | STOP | STOP | | | | | | |
| n+80 | BD | BD | BD | BD | BD | BD | | | | | | |
| n+100 | BD | BD | BD | BD | BD | BD | | | | | | |
| n+120 | BD | BD | BD | BD | BD | BD | | | | | | |
| n+140 | BD | BD | BD | BD | BD | BD | | | | | | |
| n+160 | BD | BD | BD | BD | BD | BD | | | | | | |
| n+180 | Skip | Skip | Skip | Skip | Skip | Skip | VAR | VAR | VAR | VAR | VAR | VAR |
| n+200 | | | | | | | VAR | VAR | VAR | VAR | VAR | VAR |
| n+220 | | | | | | | VAR | VAR | OK | OK | OK | VAR |
| n+240 | | | | | | | VAR | VAR | STOP | STOP | STOP | OK |
| n+260 | | | | | | | OK | OK | STOP | STOP | STOP | STOP |
| n+280 | | | | | | | BD | BD | BD | BD | BD | BD |
| n+300 | | | | | | | BD | BD | BD | BD | BD | BD |
| n+320 | | | | | | | BD | BD | BD | BD | BD | BD |
| n+340 | | | | | | | BD | BD | BD | BD | BD | BD |
| n+360 | | | | | | | BD | BD | BD | BD | BD | BD |
| n+380 | | | | | | | Skip | Skip | Skip | Skip | Skip | Skip |
| n+400 | | | | | | | | | | | | |
| n+420 | | | | | | | | | | | | |

VAR : VARIANCE  STOP : CALCULATION STOP

EP 4 148 630 A1

# FIG. 20

INFORMATION PROCESSING DEVICE

10

10e GPU

10e GPU

10e GPU

10e GPU

10a COMMUNICATION DEVICE

10b HDD

10c MEMORY

10d CPU

Europäisches
Patentamt

European
Patent Office

Office européen
des brevets

## EUROPEAN SEARCH REPORT

Application Number

EP 22 18 0121

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAO XUELI ET AL: "Fast Deep Learning Training through Intelligently Freezing Layers", 2019 INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 14 July 2019 (2019-07-14), pages 1225-1232, XP033637632, DOI: 10.1109/ITHINGS/GREENCOM/CPSCOM/SMARTDATA.2019.00205 [retrieved on 2019-10-17] * abstract; Sections I and III-V; figures 2, 4 * | 1-9 | INV. G06N3/08 G06N3/063 |
| X | Mahsereci Maren ET AL: "Early Stopping without a Validation Set", , 28 March 2017 (2017-03-28), pages 1-16, XP055898789, Retrieved from the Internet: URL:https://arxiv.org/pdf/1703.09580.pdf [retrieved on 2022-03-08] * abstract; Sections 1-4; figure 1 * | 1-9 | |
| A | YUHAN LIU ET AL: "AutoFreeze: Automatically Freezing Model Blocks to Accelerate Fine-tuning", ARXIV.ORG, CORNELL UNIVERSITY LIBRARY, 201 OLIN LIBRARY CORNELL UNIVERSITY ITHACA, NY 14853, 3 April 2021 (2021-04-03), XP081928997, * abstract; Sections 1-3; figures 1-3 * | 1-9 | TECHNICAL FIELDS SEARCHED (IPC) G06N |

-/--

The present search report has been drawn up for all claims

| Place of search | Date of completion of the search | Examiner |
|---|---|---|
| The Hague | 28 November 2022 | Klasen, TJ |

EPO FORM 1503 03.82 (P04C01)

Europäisches
Patentamt
European
Patent Office
Office européen
des brevets

# EUROPEAN SEARCH REPORT

Application Number

EP 22 18 0121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAFAYENIKOO POONEH ET AL: "Weight Update Skipping: Reducing Training Time for Artificial Neural Networks", IEEE JOURNAL ON EMERGING AND SELECTED TOPICS IN CIRCUITS AND SYSTEMS, [Online] vol. 11, no. 4, 5 December 2020 (2020-12-05), pages 563-574, XP055914592, Piscataway, NJ, USA ISSN: 2156-3357, DOI: 10.1109/JETCAS.2021.3127907 Retrieved from the Internet: URL:https://arxiv.org/pdf/2012.02792.pdf> [retrieved on 2022-11-25] * abstract; Sections 1-3; figures 1-3 * | 1-9 | |
| A | WUYANG CHEN ET AL: "Automated Synthetic-to-Real Generalization", ARXIV.ORG, CORNELL UNIVERSITY LIBRARY, 201 OLIN LIBRARY CORNELL UNIVERSITY ITHACA, NY 14853, 14 July 2020 (2020-07-14), XP081722461, * abstract; Section 2; figures 3-4 * | 1-9 | TECHNICAL FIELDS SEARCHED (IPC) |

The present search report has been drawn up for all claims

| Place of search | Date of completion of the search | Examiner |
|---|---|---|
| The Hague | 28 November 2022 | Klasen, TJ |

EPO FORM 1503 03.82 (P04C01)

**EP 4 148 630 A1**

**Patent documents cited in the description**

- JP 2018520404 A
- JP 10198645 A
- US 6119112 A